**Europäisches Patentamt**

**European Patent Office**

**Office européen des brevets**

(19)

(11) Veröffentlichungsnummer : **0 378 110 B1**

(12) # EUROPÄISCHE PATENTSCHRIFT

(45) Veröffentlichungstag der Patentschrift :
**30.10.91 Patentblatt 91/44**

(51) Int. Cl.⁵ : **B01J 2/12, A23G 3/26,**
**F26B 11/04, B01J 2/00,**
**A61J 3/00**

(21) Anmeldenummer : **90100161.0**

(22) Anmeldetag : **04.01.90**

(54) **Vorrichtung zum Granulieren, Pelletieren, Dragieren und/oder Trocknen rieselfähigen Gutes.**

(30) Priorität : **12.01.89 DE 3900773**

(43) Veröffentlichungstag der Anmeldung :
**18.07.90 Patentblatt 90/29**

(45) Bekanntmachung des Hinweises auf die
Patenterteilung :
**30.10.91 Patentblatt 91/44**

(84) Benannte Vertragsstaaten :
**CH DE IT LI**

(56) Entgegenhaltungen :
**EP-A- 0 131 152**

(73) Patentinhaber : **Hüttlin, Herbert**
**Daimlerstrasse 7**
**W-7853 Steinen (DE)**

(72) Erfinder : **Hüttlin, Herbert**
**Daimlerstrasse 7**
**W-7853 Steinen (DE)**

(74) Vertreter : **Goetz, Rupert, Dipl.-Ing. et al**
**Wuesthoff & Wuesthoff Patent- und**
**Rechtsanwälte Schweigerstrasse 2**
**W-8000 München 90 (DE)**

**Beschreibung**

Die Erfindung betrifft eine Vorrichtung zum Granulieren, Pelletieren, Dragieren und/oder Trocknen rieselfähigen Gutes mit einem Behälter, der um eine mindestens annähernd waagerechte Drehachse drehantreibbar ist und einen Rumpf sowie zwei auf je einer Seite des Rumpfes angeordnete Stirnwände aufweist.

Solche Vorrichtungen dienen beispielsweise dazu, Granulat, Pellets, Tabletten oder auch Saatgut mit einem oder mehreren Überzügen zu versehen, indem Dragiergut in den Behälter eingebracht und mit einer flüssigen Überzugsmasse besprüht wird, während der Behälter sich dreht und dadurch das Dragiergut in Bewegung hält. Dabei wird angestrebt, daß sich auf allen Partikeln des Dragiergutes Überzüge von gleichmäßiger Beschaffenheit, vor allem von gleichmäßiger Dicke und Dichte, bilden.

Die Wahrscheinlichkeit, daß dieses Ziel erreicht wird, ist dann am größten, wenn die einzelnen Partikel bei der Drehung des Behälters in regelmäßiger Folge übereinander hinwegrollen. Es muß also dafür gesorgt werden, daß die einzelnen Partikel des Dragiergutes von dem sich drehenden Behälter im wesentlichen gleichmäßig über eine bestimmte Strecke nach oben mitgenommen und dann freigegeben werden, so daß sie wieder nach unten rieseln können.

Es sind Dragiervorrichtungen der eingangs beschriebenen Gattung bekannt, beispielsweise aus der US-A-3874092, deren Behälter einen zylindrischen Rumpf und beiderseits davon je einen sich kegelstumpfförmig axial nach außen verjüngenden Stirnwandabschnitt aufweist. In solchen Behältern wird das Dragiergut im allgemeinen nur dann genügend kräftig in Bewegung versetzt, wenn an der Innenseite des Rumpfes Schikanen ausgebildet sind, die das Dragiergut daran hindern, an der Innenseite des Rumpfes abwärts zu rutschen. Solche Schikanen können jedoch das Reinigen des Behälters wesentlich erschweren, vor allem wenn es sich um Schikanen wechselnder Form oder Anordnung handelt, mit denen die Durchmischung des Dragiergutes gefördert werden soll. Entsprechendes gilt auch für Dragierbehälter, deren Rumpf und Stirnwände sich zu einer Kugel- oder Zwiebelform ergänzen. Solche Dragierbehälter sind ebenfalls aus der US-A-3874092 bekannt sind.

Aus der EP-A-0072467 ist ferner eine Vorrichtung der eingangs beschriebenen Gattung bekannt, deren Behälter zwei kegelstumpfförmige Stirnwandabschnitte aufweist, die sich in den von einem trommelförmigen Rumpf umschlossenen Raum hineinerstrecken. Damit wird erreicht, daß das Dragiergut sich zwischen dem Rumpf und jedem der beiden kegelstumpfförmigen Stirnwandabschnitte verspreizt, wodurch Reibungskräfte entstehen, die dazu beitragen, daß das Dragiergut bei der Drehung des Behälters nach oben mitgenommen wird. Das Dragiergut gelangt infolgedessen bei gegebener Drehgeschwindigkeit des Behälters weiter und vor allem gleichmäßiger nach oben, um dann über das von unten heraufkommende Dragiergut und auch über die nach innen ragenden kegelstumpfförmigen Stirnwandabschnitte hinweg herabzurieseln. Dadurch, daß ständig ein Teil des Dragiergutes über die nach innen ragenden Stirnwandabschnitte hinwegrieselt, wird zusätzlich ein Mischeffekt erzielt, der ebenfalls dazu beiträgt, daß alle Partikel des Dragiergutes besonders gleichmäßige Überzüge erhalten. Da auf jegliche Schikane verzichtet werden kann, läßt sich auch die Gefahr, daß die Überzüge beschädigt werden, besonders gering halten. Deshalb kann bei gegebener Baugröße des Behälters eine verhältnismäßig große Menge Dragiergut je Zeiteinheit verarbeitet werden.

Der Erfindung liegt die Aufgabe zugrunde, die Leistungsfähigkeit einer Vorrichtung der eingangs beschriebenen Gattung noch weiter zu steigern.

Die Aufgabe ist erfindungsgemäß mit einer Vorrichtung der eingangs beschriebenen Gattung gelöst, bei welcher der Rumpf in einer zur Drehachse normalen Teilungsebene in zwei Rumpfteile unterteilt ist, die in bezug zueinander beweglich sind. Die Erfindung ist mit besonderem Vorteil bei einem Behälter anwendbar, der die aus der erwähnten EP-A-0072467 bekannte Form hat.

Für die Relativbeweglichkeit der beiden Rumpfteile gibt es mehrere Möglichkeiten, von denen jede bestimmte Vorteile hat. Besonders vorteilhaft ist es, wenn die beiden Rumpfteile mit unterschiedlichen Geschwindigkeiten drehantreibbar sind. Dadurch läßt sich die Mischwirkung des sich drehenden Behälters wesentlich verbessern.

Das Merkmal "mit unterschiedlichen Geschwindigkeiten" soll im Sinne der Erfindung immer dann als erfüllt gelten, wenn die beiden Rumpfteile Drehgeschwindigkeiten haben, die sich nach Größe und/oder Richtung unterscheiden. So ist es beispielsweise möglich, daß ein Rumpfteil vorübergehend stillsteht, während der andere Rumpfteil sich dreht und die Bewegungsverhältnisse anschließend umgekehrt werden, so daß der erstgenannte Rumpfteil sich dreht, während der zweite stillsteht. Es ist auch möglich, daß ein Rumpfteil langsam und der andere schneller gedreht wird ; auch dabei können die Geschwindigkeitsverhältnisse von Zeit zu Zeit umgekehrt werden.

Wenn die beiden Rumpfteile gegenläufig antreibbar sind, ist ein stetiger Betrieb während der gesamten Behandlung des Dragiergutes möglich. Es kann jedoch auch vorteilhaft sein, die Drehrichtungen beider Rumpfteile von Zeit zu Zeit — oder für das Entleeren des fertig behandelten Dragiergutes — umzukehren. Maßnahmen, die das Entleeren des Dragiergutes durch Schlitze in einer Stirnwand oder in beiden Stirnwänden eines Dragierbehälters hindurch ermöglichen, sind aus der EP-A-0238028 bekannt ; solche Maßnahmen sind auch bei einer Vorrichtung mit den Merkmalen der vorliegenden Erfindung anwendbar.

Vorzugweise ist jedem der beiden Rumpfteile ein eigener Antriebsmotor zugeordnet. Es ist aber auch möglich, beide Rumpfteile von einem gemeinsamen Motor aus anzutreiben, wenn zwischen diesem Motor und einem der beiden Rumpfteile ein Getriebe angeordnet ist, das es ermöglicht, das betreffende Rumpfteil mit einer Geschwindigkeit zu drehen, die sich in Größe und/oder Richtung von der Drehgeschwindigkeit des anderen Rumpfteils unterscheidet.

Die Erfindung kann dadurch weitergebildet sein, daß mit jedem der beiden Rumpfteile eine dem anderen Rumpfteil zugewandte Innenwand aus einzelnstehenden einander überlappenden Ringsektoren zu gemeinsamer Drehung verbunden ist und daß zwischen diesen Innenwänden eine Fuge freigelassen ist, die es ermöglicht, den Behälter bei einer bestimmten Drehrichtung der beiden Rumpfteile durch die Innenwände hindurch zu entleeren.

Bei der Vorrichtung nach der EP-A-0238028 sind die äußeren Stirnwände eines drehantreibbaren Behälters von einzelstehenden, einander überlappenden Ringsektoren gebildet. Dieses Gestaltungsprinzip wird gemäß der vorstehend beschriebenen Weiterbildung der Erfindung auf Innenwände eines in einer achsnormalen Ebene geteilten Behälters übertragen. Damit wird der zusätzliche Vorteil erreicht, daß der Behälter mittig durch die zwischen den beiden Rumpfteilen freigelassene Fuge entleert werden kann.

Bei der vorstehend beschriebenen Weiterbildung der Erfindung ist es ferner vorteilhaft, wenn im Behälter ein Brückenteil angeordnet ist, das die radial inneren Ränder der Innenwände derart übergreift, daß das Gut nicht von oben in den Zwischenraum zwischen den Innenwänden gelangen kann.

Falls eine Abdichtung zwischen den Rumpfteilen erwünscht ist, kann an einem der beiden Rumpfteile eine Schürze befestigt sein, die den anderen Rumpfteil abdichtend umschließt. Auch andere gleitende oder berührungsfrei wirkende Abdichtungen zwischen den beiden Rumpfteilen sind möglich.

Eine Abdichtung zwischen den Rumpfteilen ist jedoch dann entbehrlich, wenn auf andere Weise verhindert wird, daß kleine Partikel des Gutes in unkontrollierter Weise durch die Fuge zwischen den beiden Rumpfteilen aus dem Behälter herausfallen. Beispielsweise kann dies mit Innenwänden der genannten Art verhindert werden, oder die Breite der Fuge kann kleiner sein als der Durchmesser des einzelnen Partikels des Dragiergutes. Alternativ oder zusätzlich kann gemäß einer Ausführungsform der Erfindung zwischen den beiden Rumpfteilen eine im Prinzip beliebig breite Fuge freigelassen sein, wenn diese mindestens in einem unteren Bereich des Behälters von einem Gaseinlaßkanal überbrückt ist.

Durch den Gaseinlaßkanal kann ein zur Behandlung des Dragiergutes geeignetes Gas in den Behälter eingeblasen oder eingesaugt werden, beispielsweise trockene, erwärmte Luft. Das Gas strömt im wesentlichen radial durch die Fuge und verhindert, daß Partikel des Dragiergutes durch die Fuge aus dem Behälter fallen. Der Gasstrom kann dazu beitragen, das Gut im Behälter zu trocknen. Ein ausreichend intensiver Gasstrom kann im Behälter sogar eine Art Wirbelbett erzeugen, durch das sich die einzelnen Teile des Gutes in umso kürzeren Zeitabständen hindurchbewegen, je stärker sich die Drehgeschwindigkeiten der beiden Rumpfteile voneinander unterscheiden.

Ausführungsbeispiele mit weiteren Einzelheiten der Erfindung werden im folgenden anhand schematischer Zeichnungen erläutert. Es zeigt :

Fig. 1    eine erste Ausführungsform einer erfindungsgemäßen Vorrichtung in Vorderansicht,
Fig. 2    eine teilweise als Schnitt in der senkrechten Ebene II-II dargestellte Seitenansicht der Vorrichtung,
Fig. 3    den senkrechten axialen Schnitt III-III in Fig. 1,
Fig. 4    die Vorderansicht einer zweiten Ausführungsform der Erfindung und
Fig. 5    den axialen Schnitt V-V in Fig. 4.

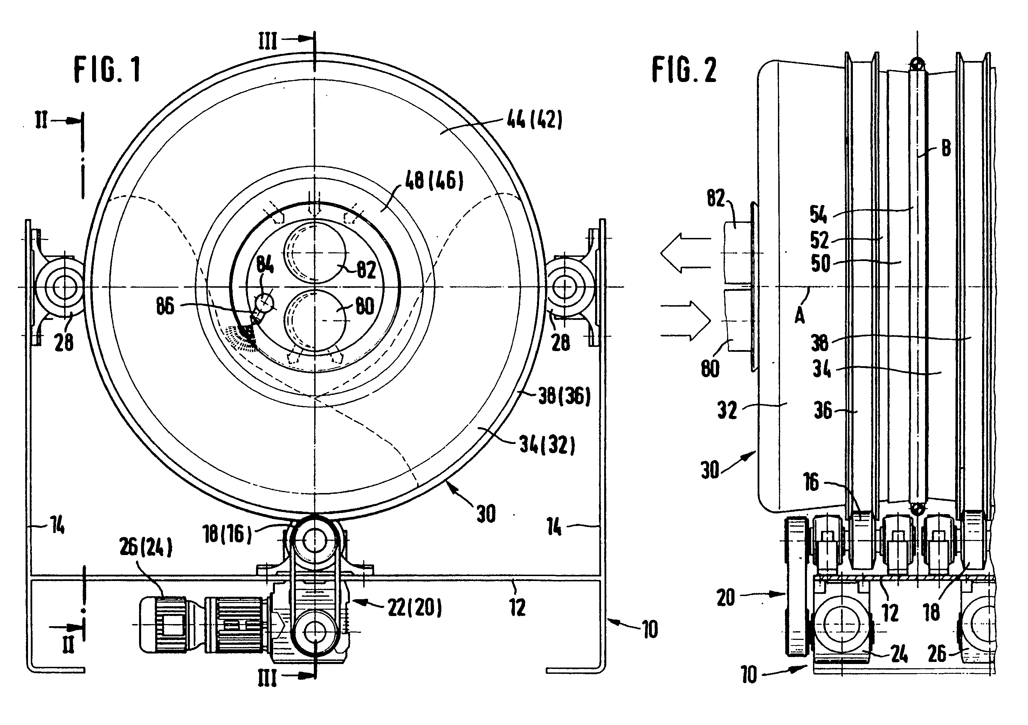

Die in Fig. 1 bis 3 dargestellte Vorrichtung hat ein Gestell 10 mit einer waagerechten Basisplatte 12 und zwei senkrechten Seitenwänden 14. In der Mitte zwischen den beiden Seitenwänden 14 sind auf der Basisplatte 12 zwei Rollen 16 und 18 gleichachsig nebeneinander gelagert. Jede dieser beiden Rollen 16 und 18 ist durch einen Riementrieb 20 bzw. 22 mit einem Antriebsmotor 24 bzw. 26 verbunden. Die beiden Antriebsmotoren 24 und 26 sind regelbar und umsteuerbar, so daß die Rollen 16 und 18 mit dem Betrag nach gleicher oder ungleicher Geschwindigkeit in gleicher Richtung oder in entgegengesetzten Richtungen antreibbar sind. An den beiden Seitenwänden 14 sind je zwei gleichachsige Rollen 28 frei drehbar gelagert. Die Drehachsen sämtlicher Rollen 16, 18 und 28 sind waagerecht und zueinander parallel.

Auf den beiden Rollen 16 und 18 und zwischen den beiden Rollenpaaren 28 ist ein Behälter 30 um seine waagerechte Achse A drehbar gelagert. Der Behälter 30 ist in bezug auf eine zu seiner Achse A normale Symmetrieebene B symmetrisch gestaltet und ist in einer achsnormalen Ebene C geteilt, die grundsätzlich mit der Symmetrieebene B zusammenfallen kann ; im Ausführungsbeispiel gemäß Fig. 1 bis 3 ist die Teilungsebene C jedoch in einem geringen Abstand parallel zur Symmetrieebene B angeordnet. Der Behälter 30 hat einen Rumpf, der in zwei Rumpfteile 32 und 34 unterteilt ist.

Die beiden Rumpfteile 32 und 34 sind gemäß Fig. 1 und 2 annähernd gleich gestaltet und verjüngen sich beide axial nach innen zur Symmetriebene B hin ; sie haben also ihren geringsten Durchmesser in der Symmetrieebene B. Jeder der beiden Rumpfteile 32 und 34 hat außen einen Laufring 36 bzw. 38, der auf der Rolle 16 bzw. 18 und zwei einander in bezug auf die Achse A diametral gegenüberliegenden Rollen 28 läuft. Die Laufringe 36 und 38 sind durch die zugehörigen Rollen 16 und 28 bzw. 18 und 28 derart genau geführt, daß zwischen den beiden Rumpfteilen 32 und 34 nur eine schmale Fuge 40 bleibt, die gerade groß genug ist, um zu verhindern, daß die beiden Rumpfteile bei ihrer Relativdrehung in unkontrollierter Weise aneinander schleifen.

An jedes der beiden Rumpfteile 32 und 34 schließt sich ein kegelstumpfförmiger, radial äußerer Stirnwandabschnitt 42 bzw. 44 an, der zur Symmetrieebene B hin geneigt ist und somit in den vom zugehörigen Rumpfteil 32 bzw. 34 umschlossenen Raum hineinragt. An jeden dieser Stirnwandabschnitte 42 und 44 schließt sich ein radial innerer, ebenfalls kegelstumpfförmiger Stirnwandabschnitt 46 bzw. 48 an, der von der Symmetrieebene B weg geneigt ist.

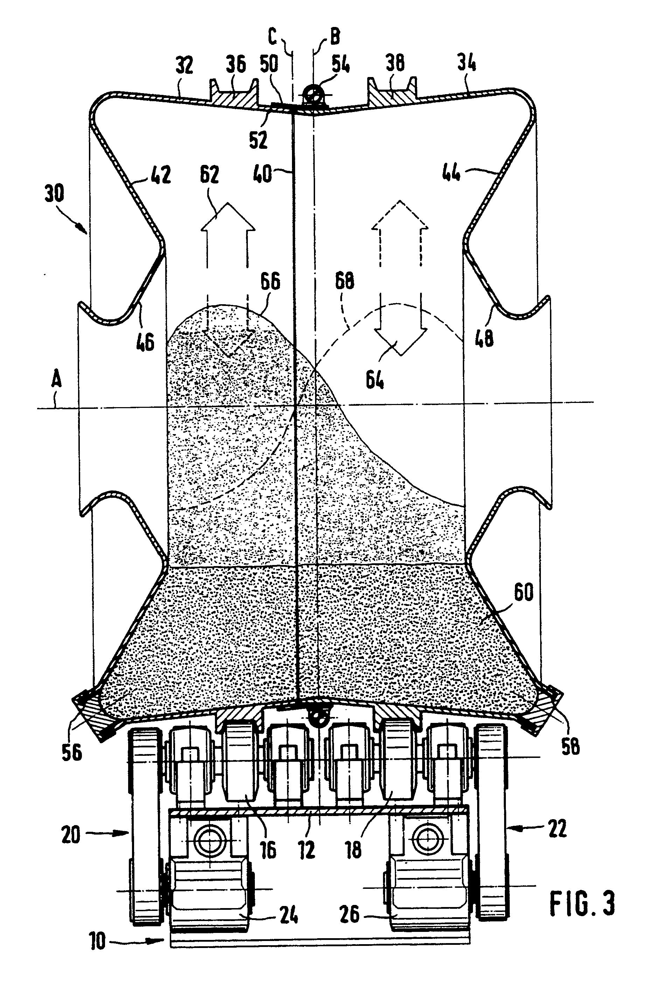

Bei der in Fig. 1 bis 3 dargestellten Ausführungsform ist die Fuge 40 durch eine Schürze 50 aus einem elastomeren Werkstoff überbrückt. Die Schürze 50 liegt gleitend an einem Randabschnitt 52 des in Fig. 2 und 3 linken Rumpfteils 32 an und ist mit Spannvorrichtungen 54, wie sie als Schlauchschellen bekannt sind, am Rumpfteil 34 befestigt.

Am Übergang zwischen jedem der beiden Rumpfteile 32 und 34 und dem zugehörigen radial äußeren Stirnwandabschnitt 42 bzw. 44 ist eine verschließbare Entnahmeöffnung 56 bzw. 58 angeordnet, durch die im Behälter 30 behandeltes Gut 60 oder eine zum Reinigen des Behälters verwendete Flüssigkeit abgelassen werden kann.

In Fig. 3 ist die Bewegung des Gutes 60 für den Fall dargestellt, daß die beiden Hälften des Behälters 30 sich gegenläufig drehen, und zwar die linke Hälfte in Richtung des mit vollen Linien gezeichneten Pfeils 62 und die rechte Hälfte in Richtung des ebenfalls mit vollen Linien gezeichneten Pfeils 64. Das Gut 60 wird also in der linken Hälfte des Behälters 30 vom Rumpfteil 32 und dem angrenzenden Stirnwandabschnitt 42 in Richtung des Pfeils 62 mitgenommen, während es in der rechten Hälfte des Behälters 30 vom Rumpfteil 34 und dem angrenzenden Stirnwandabschnitt 44 in Richtung des Pfeils 64 mitgenommen wird. Diese Mitnahme bedeutet in beiden Fällen eine Aufwärtsbewegung des Gutes 60, die erst deutlich oberhalb der durch die Achse A definierten waagerechten Ebene endet und in eine Bewegung übergeht, bei der das Gut 60 über das sich aufwärtsbewegende Gut hinweg abwärts rieselt.

Das Gut 60 rieselt dabei nicht nur abwärts, sondern rieselt links auch über den Stirnwandabschnitt 42 und rechts über den Stirnwandabschnitt 44. Wegen der gegenläufigen Drehung der beiden Behälterhälften bildet das Gut 60, auf die senkrechte Zeichnungsebene der Fig. 3 projiziert, zwei Konturen 66 und 68, von denen die Kontur 66 in der linken Hälfte und die Kontur 68 in der rechten Hälfte eine Kuppe bildet. Ausgehend von diesen Kuppen rieselt das Gut schräg in die jeweils gegenüberliegende Hälfte des Behälters 30. Es bilden sich also zwei Gutströmungen mit entgegengerichteten Axialkomponenten, durch die das Gut 60 rasch und gründlich durchmischt wird.

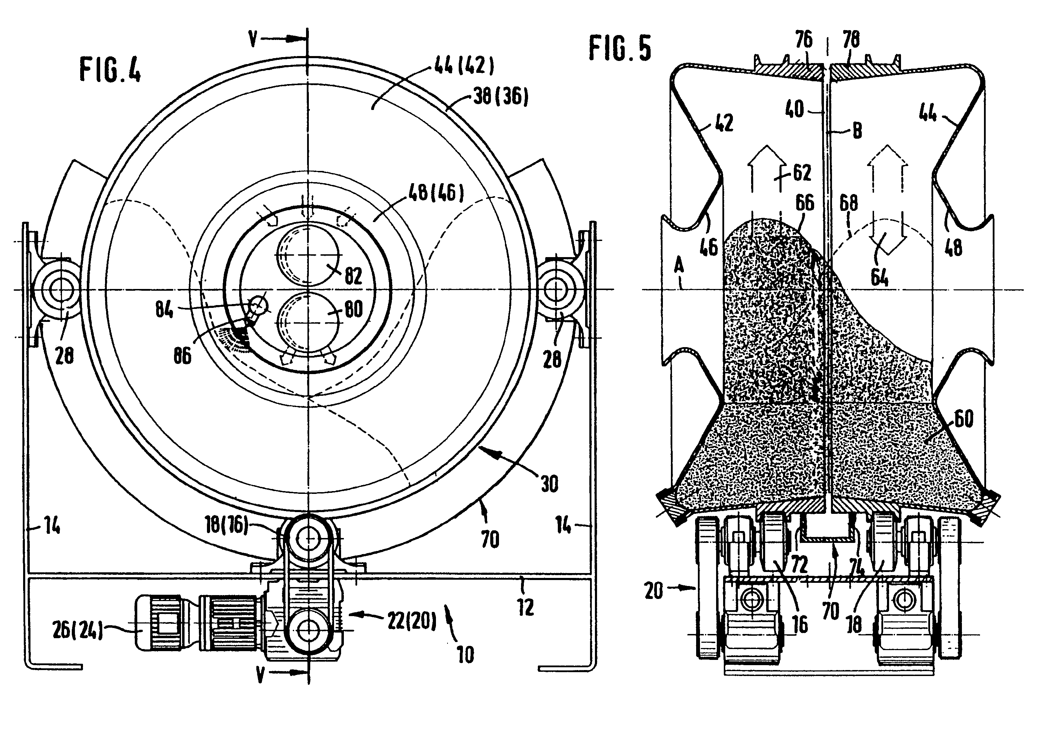

Bei der Ausführungsform gemäß Fig. 4 und 5 ist die Symmetrieebene B zugleich Teilungsebene. Die Fuge 40 ist radial außen von einem ringförmigen Gaseinlaßkanal 70 abgedeckt. Der Gaseinlaßkanal 70 ist in Seitenansicht gemäß Fig. 4 kreisförmig und im Schnitt gemäß Fig. 5 U-förmig mit zwei Schenkeln 72 und 74. Die beiden Rumpfteile 32 und 34 haben in ihren einander benachbarten Bereichen je einen genau bearbeiteten Kragen 76, 78, gegen den je einer der Schenkel 72 bzw. 74 gleitend oder mit geringem Spalt berührungsfrei abdichtet.

Unabhängig davon, ob die Fuge 40 gemäß Fig. 1 bis 3 abgedichtet oder durch den in Fig. 4 und 5 dargestellten Gaseinlaßkanal mindestens auf einem großen Teil des Umfangs der Trommel 40 überbrückt ist, können zentrale, parallel zur Achse A angeordnete Leitungen 80 und 82 zum Zu- und Abführen von Trocknungsluft vorgesehen sein. Durch eine weitere achsparallele Leitung 84 kann eine Flüssigkeit zugeführt werden, die durch Düsen 86 auf das Gut 60 aufgesprüht wird.

## Patentansprüche

1. Vorrichtung zum Granulieren, Pelletieren, Dragieren und/oder Trocknen rieselfähigen Gutes (60) mit einem Behälter (30), der um eine mindestens annähernd waagerechte Drehachse (A) drehantreibbar ist und einen Rumpf (32 ; 34) sowie zwei auf je einer Seite des Rumpfes angeordnete Stirnwände (42, 46 ; 44, 48) aufweist, dadurch **gekennzeichnet,**

daß der Rumpf in einer zur Drehachse (A) normalen Teilungsebene (C) in zwei Rumpfteile (32 ; 34) unterteilt ist, die in bezug zueinander beweglich sind.

2. Vorrichtung nach Anspruch 1, dadurch **gekennzeichnet,**
daß die beiden Rumpfteile (32 ; 34) mit unterschiedlichen Geschwindigkeiten drehantreibbar sind.

3. Vorrichtung nach Anspruch 2, dadurch **gekennzeichnet,**
daß die beiden Rumpfteile (32 ; 34) gegenläufig drehantreibbar sind.

4. Vorrichtung nach Anspruch 2 oder 3, dadurch **gekennzeichnet,**
daß jedem der beiden Rumpfteile (32 ; 34) ein eigener Antriebsmotor (24 ; 26) zugeordnet ist.

5. Vorrichtung nach Anspruch 3 oder 4, dadurch **gekennzeichnet,**
daß mit jedem der beiden Rumpfteile (32 ; 34) eine dem anderen Rumpfteil (34 ; 32) zugewandte Innenwand aus einzelnstehenden, einander überlappenden Ringsektoren zu gemeinsamer Drehung verbunden ist und daß zwischen diesen Innenwänden eine Fuge (40) freigelassen ist, die es ermöglicht, den Behälter (30) bei einer bestimmten Drehrichtung jedes der beiden Rumpfteile (32 ; 34) durch die Innenwände hindurch zu entleeren.

6. Vorrichtung nach Anspruch 5, dadurch **gekennzeichnet,**
daß im Behälter (30) ein Brückenteil angeordnet ist, das die radial inneren Ränder der Innenwände derart übergreift, daß das Gut (60) nicht von oben in die Fuge (40) zwischen den Innenwänden gelangen kann.

7. Vorrichtung nach einem der Ansprüche 1 bis 6, dadurch **gekennzeichnet,**
daß an einem der beiden Rumpfteile (34) eine Schürze (50) befestigt ist, die einen Randabschnitt (52) des anderen Rumpfteils (32) abdichtend umschließt.

8. Vorrichtung nach einem der Ansprüche 1 bis 7, dadurch **gekennzeichnet,**
daß zwischen den Rumpfteilen (32 ; 34) eine Fuge (40) freigelassen ist, die mindestens in einem unteren Bereich des Behälters (30) von einem Gaseinlaßkanal (70) überbrückt ist.

9. Vorrichtung nach Anspruch 8, dadurch **gekennzeichnet,**
daß der Gaseinlaßkanal (70) sich rings um den Behälter (30) erstreckt und eine Dichtung enthält, welche die Fuge (40) mit Ausnahme eines tiefer als die Drehachse (A) des Behälters (30) angeordneten Sektors der Fuge (40) verschließt.

10. Vorrichtung nach einem der Ansprüche 1 bis 9, dadurch **gekennzeichnet,**
daß die beiden Rumpfteile (32 ; 34) zum Entleeren des Behälters (30) axial auseinanderbewegbar sind.

## Claims

1. Apparatus for granulating, pelletizing, coating and/or drying pulverulent materials (60), said apparatus having a vessel (30) capable of being rotatably driven about a substantially horizontal axis of rotation (A) and comprising a body (32 ; 34) as well as two end walls (42, 46 ; 44, 48) on each side of the body,
**characterized** in that the body is divided along a joint face (C) perpendicular to the axis of rotation (A) into two body parts (32 ; 34) which are movable one in respect of the other.

2. Apparatus according to claim 1,
**characterized** in that the two body parts (32 ; 34) are capable of being rotatably driven at different speeds.

3. Apparatus according to claim 2,
**characterized** in that the two body parts (32 ; 34) are capable of being rotatably driven in opposite directions.

4. Apparatus according to claim 2 or 3,
**characterized** in that an own driving motor (24 ; 26) is associated to each of the two body parts (32 ; 34).

5. Apparatus according to claim 3 or 4,
**characterized** in that each of the two body parts (32 ; 34) has connected thereto, in a rotationally fast manner, an internal wall facing the other body part (34 ; 32) and consisting of individual, overlapping annular sectors, and in that between said internal walls a gap (40) is left which facilitates emptying the vessel (30) through the internal walls at a predetermined direction of rotation of each of the two body parts (32 ; 34).

6. Apparatus according to claim 5,
**characterized** in that a bridge element is disposed within the vessel (30), said bridge element straddling over the radially inner edges of the internal walls such that said materials (60) cannot enter the gap (40) between the internal walls from above.

7. Apparatus according to any of claims 1 to 6,
**characterized** in that one of the two body parts (34) has a skirt (50) attached thereto which sealingly encloses an edge portion (52) of the other body part (32).

8. Apparatus according to any of claims 1 to 7,
**characterized** in that a gap (40) is left between the body parts (32 ; 34), a gas feeding conduit (70) spanning across said gap in at least a lower region of the vessel (30).

9. Apparatus according to claim 8,

**characterized** in that the gas feeding conduit (70) extends around the vessel (30) and contains a seal which closes the gap (40) except for a sector of the gap (40) disposed at a level lower than the axis of rotation (A) of the vessel (30).

10. Apparatus according to any of claims 1 to 9,

**characterized** in that the two body parts (32 ; 34) are movable axially away from one another to empty the vessel (30).

## Revendications

1. Appareil pour granuler, pelletiser, dragéifier et/ou sécher une matière pulvérulente (60), ledit appareil comprenant un récipient (30) capable d'être entraîné en rotation autour d'un axe de rotation (A) sensiblement horizontal et comportant un corps (32 ; 34) ainsi que deux parois de bout (42, 46 ; 44, 48) disposées sur chaque côté du corps,

**caractérisé** en ce que le corps est divisé, selon un plan de séparation (C) perpendiculaire à l'axe de rotation (A), en deux parties du corps (32 ; 34) mobiles l'une par rapport à l'autre.

2. Appareil selon la revendication 1,

**caractérisé** en ce que les deux parties du corps (32 ; 34) sont capables d'être entraînées en rotation à des vitesses différentes.

3. Appareil selon la revendication 2,

**caractérisé** en ce que les deux parties du corps (32 ; 34) sont capables d'être entraînées en rotation en directions opposées.

4. Appareil selon la revendication 2 ou 3,

**caractérisé** en ce qu'un moteur d'entraînement séparé (24 ; 26) est associé à chacune des deux parties du corps (32 ; 34).

5. Appareil selon la revendication 3 ou 4,

**caractérisé** en ce qu'une paroi interne est reliée, fixe de rotation, avec chacune des deux parties du corps (32 ; 34), ladite paroi étant tournée vers l'autre partie du corps (34 ; 32) et comprenant des secteurs annulaires individuels chevauchants, et en ce que, entre ces parois internes, un joint (40) est laissé ouvert, ledit joint facilitant la vidange du récipient (30) à travers les parois internes pour une direction de rotation prédéterminée de chacune des deux partis du corps (32 ; 34).

6. Appareil selon la revendication 5,

**caractérisé** en ce que l'on a disposé dans le récipient (30) un élément de pont qui enjambe les bords intérieurs, par rapport à la direction radiale, des parois internes de telle manière que la matière (60) ne peut entrer d'en haut dans le joint (40) existant entre les parois internes.

7. Appareil selon l'une quelconque des revendications 1 à 6,

**caractérisé** en ce qu'une jupe (50) est attachée à l'une des deux parties du corps (34), cette jupe entourant, en la calfeutrant, une partie marginale (52) de l'autre partie du corps (32).

8. Appareil selon l'une quelconque des revendications 1 à 7,

**caractérisé** en ce que, entre les parties du corps (32 ; 34), un joint (40) est laissé ouvert sur lequel est superposé un conduit d'alimentation de gaz (70), au moins dans une région inférieure du récipient (30).

9. Appareil selon la revendication 8,

**caractérisé** en ce que le conduit d'alimentation de gaz (70) s'étend autour du récipient (30) et contient une garniture qui bouche le joint (40), sauf dans un secteur du joint (40) se trouvant à un niveau plus bas que l'axe de rotation (A) du récipient (30).

10. Appareil selon l'une quelconque des revendications 1 à 9,

**caractérisé** en ce que les deux parties du corps (32 ; 34) sont capables d'être séparées axialement l'une par rapport à l'autre en vue de la vidange du récipient (30).

FIG. 2

FIG. 1

FIG. 3

FIG.4

FIG.5

EP 0 378 110 B1